(19) Europäisches Patentamt
European Patent Office
Office européen des brevets

(11) EP 2 520 356 B1

(12) **EUROPEAN PATENT SPECIFICATION**

(45) Date of publication and mention of the grant of the patent:
**07.10.2020 Bulletin 2020/41**

(51) Int Cl.:
***B01D 65/02*** $^{(2006.01)}$ ***B01D 65/08*** $^{(2006.01)}$
***B01D 71/02*** $^{(2006.01)}$ ***B01D 67/00*** $^{(2006.01)}$

(21) Application number: **11003652.2**

(22) Date of filing: **04.05.2011**

(54) **METHOD FOR CARRYING OUT A FILTRATION PROCESS OF A FLUID**

VERFAHREN ZUR AUSFÜHRUNG EINES FILTRATIONSPROZESSES EINES FLUIDS

PROCÉDÉ DE MISE EN OEUVRE D'UN PROCÉDÉ DE FILTRATION D'UN FLUIDE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**07.11.2012 Bulletin 2012/45**

(73) Proprietor: **Grundfos Management a/s**
**8850 Bjerringbro (DK)**

(72) Inventors:
- **Holm, Allan Hjarbaek**
  **8870 Langå (DK)**
- **Dooleweerdt, Karin**
  **8850 Bjerringbro (DK)**

(74) Representative: **Patentanwälte Vollmann Hemmer Lindfeld**
**Partnerschaft mbB**
**Wallstraße 33a**
**23560 Lübeck (DE)**

(56) References cited:
**US-A- 4 284 492**
**US-A1- 2007 084 797**
**US-A1- 2007 272 607**
**US-B1- 6 287 432**

- **SARRA GAM-DEROUICH ET AL: "Electrografted Aryl Diazonium Initiators for Surface-Confined Photopolymerization: A New Approach to Designing Functional Polymer Coatings", LANGMUIR, vol. 26, no. 14, 20 July 2010 (2010-07-20) , pages 11830-11840, XP55003867, ISSN: 0743-7463, DOI: 10.1021/la100880j**
- **Wikipedia: "Capacitive deionization", Wikipedia , 21 May 2015 (2015-05-21), Retrieved from the Internet: URL:http://en.wikipedia.org/wiki/Capacitive_deionization#Membrane_capacitive_deionization [retrieved on 2015-05-21]**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).



Printed by Jouve, 75001 PARIS (FR)

## Description

Generally the invention relates to a method for carrying out a filtration process of a fluid. In particular, the invention relates to a method for carrying out a filtration process of fluids in which heavy fouling occurs.

Membranes are used in a wide variety of separation applications including food and beverage and water treatment industries. By nature the membrane, the surface contains pores onto which organics, bacteria, and microbes can readily settle, particularly when there is an applied pressure on the system to increase water flux across the membrane.

Depending on the specific system a wide variety of membrane fouling can occur; scaling due to concentration polarization, bio-fouling due to adhesion of bacteria and growth of biofilms, colloidal fouling from suspended particles, organic films from natural organic matter and humic acids by way of example.

In some applications repetitive use of back flush is not sufficient to keep the membrane clean and thus a cleaning process (CIP), in which cleaning chemicals are used, is required. In heavy fouling fluids it would be an advantage to have a filtration membrane having intrinsic anti fouling properties.

In US 2007/084797 A1, a method of purifying fluids, such as liquids, including water, as well as gases, including the air using a nanostructured material is disclosed. Also disclosed is a nanostructured material comprising defective carbon nanotubes chosen from impregnated, functionalized, doped, charged, coated, and irradiated nanotubes, and combinations thereof. The defective carbon nanotubes contain a defect which is a lattice distortion in at least one carbon ring.

US6287432B1 discloses solid membranes comprising an intimate, gas-impervious, multi-phase mixture of an electronically-conductive material and an oxygen ion-conductive material and/or a mixed metal oxide of a perovskite structure are described. Electrochemical reactor components, such as reactor cells, and electrochemical reactors are also disclosed. The reactor cells generally comprise first and second zones separated by an element having a first surface capable of reducing oxygen to oxygen ions, a second surface capable of reacting oxygen ions with an oxygen-consuming gas, an electron-conductive path between the first and second surfaces and an oxygen ion-conductive path between the first and second surfaces.

The object of the invention is to provide a filtration method that is easy to use and clean when applied in fluids leading to heavy fouling phenomena.

An object of the invention is to provide a filtration method that is suitable for use in applications in which back flush is not sufficient to clean the filtration membrane.

These objectives can be achieved by a method for carrying out a filtration process having the features defined in claim 1. Preferred embodiments are defined in the dependent sub claims and explained in the following description and shown in the accompanying drawings.

The method for carrying out a filtration process of a fluid according to the invention uses a filtration membrane comprising a porous base layer attached to an electrically conductive filtration layer having pores extending through the filtration layer and the following step:

a) attaching of a compound on the filtration layer and hereby providing a protective surface layer on the filtration layer or forming a second compound from a first compound and attaching the second compound on the filtration layer and hereby providing a protective surface layer on the filtration layer

b) filtering a fluid comprising foulants, wherein some of the foulants settle along the surface of the pores

c) at least partially cleaving off the protective surface layer of the filtration layer during a filtration process, thereby removing the foulants from the filtration layer

d) grafting a new protective surface layer (40) on the filtration layer before the filtration layer is being reused to filter the fluid.

This method provides an efficient way of filtering in heavy fouling fluids and especially fluids in which back flush is not sufficient to clean the filtration membrane.

It is an advantage that the method comprises a step in which the protective surface layer is, at least partially, cleaved off the filtration layer during a filtration process. Hereby it is achieved that the fouling layer can be removed easy and efficiently.

It may be beneficial that the method comprises the step of applying an electrical field to the filtration membrane so that:

a) a compound is attached on the filtration layer through an electrochemical process and that

b) the protective surface layer is, at least partially, cleaved off the filtration layer through an electrochemical process during the filtration process to loosen the layer and enable an easier removal.

Hereby a very efficient cleaning of the filtration layer can be achieved.

It may be an advantage to apply a method according to the invention where the transmembrane pressure across the filtration membrane and/or the flux through the filtration layer of the filtration membrane is determined and:

a) a compound is attached on the filtration layer and

b) the compound is, at least partially, cleaved off the protective surface layer on the filtration layer based on predefined and determined transmembrane pressure and/or flux conditions during the filtration process.

Hereby it is achieved that the protective surface layer can be grafted and cleaved off according to the actual conditions of the filtration process.

It may be beneficial to apply a method according to the invention where the thickness of the protective surface layer is controlled by regulating the electrical potential of the filtration layer of the filtration membrane. Hereby it is achieved that control of the thickness of the protective surface layer can be carried out at least to some extent.

It may be an advantage to apply a method according to the invention where a back flush process is performed and that the protective surface layer is, at least partially, cleaved off the filtration layer basically contemporary with the back flush process. Hereby it is achieved that the fouling layer can be removed very effectively.

It may be beneficial to apply a method according to the invention where the fluid containing a compound is drained away and that a compound is added to the fluid. Hereby it is achieved that the fouling layer can be removed and the filtration process can be continued afterwards.

It may be an advantage that short pulsed electrical excursions are used during a back flush process. Short pulsed electrical excursions may be provided by an electrical source and they may inhibit fouling from settling on the filtration layer and the protective surface layer.

The present invention will become more fully understood from the detailed description given herein below and the accompanying drawings are given by way of illustration only, and thus, they are not limitative of the present invention, and wherein:

| | |
|---|---|
| Fig. 1 | shows a schematical cross-sectional view of a filtration layer of a filtration membrane ; |
| Fig. 2a | shows a schematic cross-sectional view of a filtration layer of a filtration membrane ; |
| Fig. 2b | shows a close up view of a filtration layer provided with a protective surface layer; |
| Fig. 3a | shows a close up view of a filtration layer during a filtration process; |
| Fig. 3b | shows a close up view of a filtration layer after the protective surface layer has been removed from it; |
| Fig. 4 | shows a schematic cross-sectional view of a filtration system; |
| Fig. 5 a | shows a close up view of a filtration layer before attachment of a compound to the filtration layer surface; |
| Fig. 5 b | shows a close up view of the filtration layer shown in Fig. 5 a when the compound is attached to the filtration layer surface; |
| Fig. 6 a | shows a close up view of a filtration layer invention; |
| Fig. 6 b | shows a close up view of a filtration layer in a situation where the surface layer is being cleaved off the filtration layer; |
| Fig. 7 a | shows a close up view of a grafted layer where the compounds are having long chain lengths; |
| Fig. 7 b | shows a close up view of a grafted layer where the compounds are having shorter chain lengths; |
| Fig. 8 a | is a graph showing the flux ratio versus time for a prior art filtration membrane and a filtration membrane ; |
| Fig. 8 b | is a graph showing the flux ratio versus time before and after a CIP process for a prior art filtration membrane and a filtration membrane ; |
| Fig. 9 a | shows examples of compounds that can be used to build an anti fouling layer on a filtration layer of a filtration membrane; |
| Fig. 9 b | shows example of a compound reaction leading to deposition of an anti fouling layer on a filtration layer of a filtration membrane and |
| Fig. 9 c | shows how additional layers can be added to the layer shown in Fig. 9. |

Other objects and further scope of applicability of the present invention will become apparent from the detailed description given hereinafter. It should be understood, however, that the detailed description and specific examples and indications of preferred embodiments of the invention, are given by way of illustration only, since various changes and modifications within the the scope of the attached claims will be apparent to those skilled in the art from this detailed description.

Referring now in detail to the drawings for the purpose of illustrating preferred embodiments of the present invention, elements of a filtration membrane 4 is illustrated in Fig. 1-3. The filtration membrane 4 comprises a porous base layer 8 and a filtration layer 6. The filtration layer 6 is attached to the base layer 8 and the filtration layer 6 is provided

with pores 10 extending through the filtration layer 6. The pores 10 of the filtration layer 6 may preferable be configured to filter foulants or particles within a specific size range since filtration of small foulants and small particles generally requires smaller pores than filtration of larger particles and foulants.

Fig. 1 shows that the thickness d of the filtration layer 6 is much smaller than the thickness D of the base layer 8. A compound is attached on the filtration layer 6 so that the attached compound constitutes a protective surface layer 40. The protective surface layer is configured to be at least partially cleaved off the filtration layer 6. Moreover, the filtration layer 6 is configured in a way so that a compound can be attached on the filtration layer 6 after the protective layer has been completely or partially cleaved off the filtration layer 6. This may be done by using various methods.

It may be an advantage that the base layer 8 is made in a porous material on to which it is easy to attach the filtration layer 6. It may be an advantage if the base layer 8 and the filtration layer are made in the same materials. By way of example it is possible to make the base layer 8 and the filtration layer in stainless steel. However, it is possible to apply any other suitable material. It is possible to apply ceramic materials, composites, metals or another suitable material. It is possible to make the base layer 8 and the filtration layer 6 in two different materials. A person skilled in the art would be able to join the base layer 8 and the filtration layer 6 even if they are made in different materials.

The filtration membrane 4 may have any suitable geometry. By way of example the filtration membrane 4 may be plate shaped. It is possible to have a filtration membrane 4 that has a curved geometry of a plane geometry. It is possible to build a large filtration membrane 4 out of several smaller filtration membranes 4 that are put together to constitute a large filtration membrane 4.

Fig. 2 a) illustrates a close up view of a filtration membrane 4 having a filtration layer 6 with a number of pores 10. The width $W_1$ of the pores 10 of the filtration layer 6 are indicated in Fig. 2 and it can be seen that the width $W_1$ of the pores 10 vary. It may be assumed that the width $W_1$ of the pores 10 follow a Gaussian distribution.

Fig. 2 b) illustrates a close up view of a filtration layer 6 of a filtration membrane 4 . The filtration layer 6 is provided with a protective surface layer 40. The protective surface layer 40 is thinner than half of the width $W_1$ of the pores 10 of the filtration layer 6. The width $W_1$ of the pores 10 of the filtration layer 6 vary slightly. The filtration layer 6 is provided with a surface layer 40 that covers the surface of the filtration layer 6. Accordingly, the whole surface of the filtration layer 6 is protected by the surface layer 40.

The thickness of the protective surface layer 40 may vary. It is possible to have a filtration layer 6 with a thickness of 1-500 nm by way of example. The width $W_2$ of the free space in the pores 10, after the protective surface layer 40 has been deposited on the filtration layer 6, is significantly smaller than the width $W_1$ of the free space in the pores 10 before the protective surface layer 40 deposition has occurred. Therefore, the deposition of the protective surface layer 40 affects the filter characteristics of the filter membrane 4. The width $W_1$ of the free space in the pores 10, before the surface layer 40 has been attached to the filtration layer 6, may be in the range of 10-500 nm by way of example and the width $W_2$ of the free space in the pores 10, after a surface layer 40 has been deposited on the filtration layer 6, may be decreased by 2-50% by way of example.

It is, as an example, possible to have a filtration membrane 4 in which the width $W_1$ of the free space in the pores 10, before the surface layer 40 has been attached to the filtration layer 6, is 100 nm and where the width $W_2$ of the free space in the pores 10 after a surface layer 40 has been deposited on the filtration layer 6 is 50 nm.

Fig. 3 a) illustrates a close up view of a filtration layer 6 of a filtration membrane 4 during a filtration process. During the filtration process the fluid 14 that is being filtered by a membrane filter is being guided along the surface of the filtration layer 6 of the filtration membrane 4. When a filtration membrane 4 is used in a cross flow filtration setup a mean stream of the fluid 14 may travel along an axis, X, that is parallel to the surface of the filtration layer 6. A portion of the fluid 14 enters the pores 10 of the filtration layer 6 and this portion of the fluid 14 is moving along the axis, Y, perpendicular to the surface of the filtration layer 6. It can be seen from Fig. 3 a) that foulants 42, 43, 44 are present in the fluid 14 and that some of these foulants 42, 43, 44 settle along the surface of the pores 10. This phenomenon is known as fouling. Settlement of foulants 42, 43, 44 will increase the resistance for fluid passage through the pores 10. Accordingly, the flux across the filtration membrane 4 (especially the flux through the filtration layer 6 of the filtration membrane 4) will decrease unless a higher pressure is applied to force fluid through the filtration membrane 4.

Fig. 3 a) shows that the fouling occurs in a distance from the filtration layer 6 because the protective surface layer 40 is protecting the filtration layer 6.

In Fig. 3 b) the protective surface layer 40 has been removed by a "cleave off process" (this may be done by using electrochemical means). Even though most of the foulants 42, 44 have been removed from the filtration layer 6, a few foulants 42, 44 are still attached to the filtration layer 6. However, since the filtration layer 6 is almost free of foulants 42, 43, 44 the filtration layer 6 is suitable for being used to filter a fluid 14. A new protective surface layer 40 is provided to the filtration layer 6 before the filtration layer 6 is used to filter the fluid 14. The foulants 42, 43, 44 may in principle be any type of foulants such as bacteria or inorganic particles by way of example.

In some applications it may be possible to cleave off all foulants 42, 43, 44 from the filtration layer 6. A new protective surface layer 40 is grafted on the filtration layer 6 before the filtration layer 6 is being reused to filter a fluid 14.

Fig. 4 illustrates a schematic cross-sectional view of a filtration system 2 using a filtration membrane 4. The

filtration system 2 comprises a housing 22 configured to guide a fluid 14 along a filtration membrane 4. The housing 22 comprises a fluid inlet 16 through which the fluid 14 enters the housing 22. The housing 22 moreover comprises a fluid outlet 18 for guiding away the fluid 14 that has passed the filtration membrane 4. The fluid 14 that is drained through the fluid outlet 18 may be circulated to the fluid inlet 16 through a fluid pipeline (not shown).

The housing 22 comprises a base member 46, and a top member 50. Together these members 46, 50 constitute a space 52 configured to receive and guide the fluid 14 from the fluid inlet 16 along the surface of the filtration membrane 4 and through the fluid outlet 18.

That portion of the fluid that 14 enters the filtration membrane 4 will initially pass through the surface of the filtration layer 6 (see Fig. 1) that will retain items in the liquid that are larger than the pore size of the membrane. Hereafter the filtered fluid (permeate) will continue through the base layer 8 and eventually be drained through the permeate outlet 20. The travel direction of the fluid is indicated with arrows.

A seal ring 34 are provided between the filtration membrane 4 and the distal ends of the filtration membrane 4 and the side members 46, 48 and the top member 50. An electrical source 12 is arranged next to the filtration system 2. This electrical source 12 delivers the voltage that is applied to the working electrode 28, the counter electrode 30 and the reference electrode 32. The working electrode 28 is connected to the electrical source 12 by a wire 54. The counter electrode 30 is connected to the electrical source 12 by a wire 56 and the reference electrode 32 is connected to the electrical source 12 by a wire 58. The electrical source 12 may comprise or be connected to a control unit (not shown) that is configured to regulate the potential at the working electrode 28, the counter electrode 30 and the reference electrode 32. The control unit may ne configured to regulate the potential at the electrodes 28, 30, 32 on the basis of external inputs (sensor inputs by way of example).

When a suitable potential is provided to the surface of the filtration membrane 4 the surface of the filtration membrane 4 is capable of delivering electrons to compounds in the surrounding fluid 14. Hereby it is possible to initiate an electrochemical process. Under some conditions it is possible to reduce a compound 24, 26 when a positive electrical potential (relative to the counter electrode 30) is applied on the surface of the filtration membrane 6. Under other conditions reduction of a compound 24, 26 requires that a negative potential is applied on the surface of the filtration membrane 6.

When a diazonium salt is present in the fluid 14 and the required conditions are present near the surface of the filtration membrane 4 it would be possible to reduce a diazonium salt 24, 26 that is present in the fluid 14. The diazonium salt can be reduced when a chemical driving force is present so that the will receive an electron and hereby cleave to release nitrogenous gas ($N_2$) and generate a highly reactive radical, R, that preferably connects to the surface of the filtration membrane 4 by the creation of a covalent bond (see Fig. 9 b)). Under some conditions it is possible to reverse the electrochemical process and hereby at least partly cleave off the grafted protective surface layer 40 of the filtration layer 6 of the filtration membrane 4, by changing the electrochemical potential and/or polarity of the working electrode 28 and the counter electrode 30. Under some conditions, only very small changes in the potential of the filtration layer 6 of the filtration membrane 4 are required to initiate grafting of a protective surface layer 40 and/or to completely of partially cleave off a protective surface layer 40. Under some conditions even a positive potential (measured relative to the counter electrode) at the filtration membrane 4 can initiate grafting of a protective surface layer 40.

It is possible to use a direct current or an alternating current to control the build up of a protective surface layer 40 and the "cleave off process". Electrical pulsations may be used to provide the intended polarisation of the filtration membrane 4 via the working electrode 28. It is possible to use sensor signals to regulate when a protective surface layer 40 has to be grafted and when a protective surface layer 40 has to be cleaved off. A useful sensor signal may be the flux through the filtration membrane 4 or the transmembrane pressure (TMP).

Advantageously, the protective layer 40 is cleaved off during a back flush process. Hereby it is possible to make a very efficient cleaning of the filtration membrane 4. The protective layer 40 prevents fouling from growing directly on the surface of the filtration membrane 4. Instead the fouling grows on the protective surface layer 40. Accordingly, most of the fouling will be removed from the filtration membrane 4 when the protective surface layer 40 is cleaved off the filtration membrane 4.

It is possible to have a two electrode system consisting of a working electrode 28 and a counter electrode 30.

When a diazonium salt is used to build up a protective surface layer 40 the protective surface layer 40 is very resistant due to the nature of the covalent bindings to the surface of the filtration membrane 4. The protective surface layer 40 may be temperature resistant up to 300 degrees Celsius. Therefore, such protective surface layer 40 is useful to filter a huge area of fluids during rather extreme conditions. This includes liquid as well as gas separation at elevated temperatures.

Fig. 5 a) is a close up view of a filtration layer 6 in a situation where no compounds 24 have been attached to the surface of the filtration layer 6. A group of diazonium salts 24 are present in the fluid near the filtration layer 6 of the filtration membrane 4. When free electrons, e-, are present (e.g. released from the electrically conducting filtration layer 6 of the filtration membrane 4) the diazonium salts 24 will react and decompose and release nitrogenous gas $N_2$ and a radical, R, that can attach on the filtration layer 6 of the filtration membrane 4. A layer of attached compounds 26 constitute a protective surface layer 40 like the one indicated in Fig. 5 b).

Fig. 6 a) shows a close up view of a filtration layer 6 of a filtration membrane 4 The filtration membrane 4 is used to filter a contaminated fluid. The fluid contains foulants 42, 43, 44. A protective surface layer 40 is attached on the filtration layer 6. The protective surface layer 40 prevents the foulants 42, 43, 44 from settling directly on the filtration layer 6. Instead the foulants 42, 43, 44 settle on the protective surface layer 40.

Fig. 6 b) shows a close up view of a filtration layer 6 of a filtration membrane 4. Fig. 6 b) illustrates a situation where the protective surface layer 40 is being cleaved off the filtration layer 6 during a back flush process. It can be seen that the fouling layer foulants 42, 43, 44 are attached on the protective layer 40 of the filtration layer 6. The foulants 42, 44 and the main portion of the protective surface layer 40 are released from the filtration layer 6. In Fig. 6 b) a minor part of the protective surface layer 40 is still attached on the surface of the filtration layer 6 after the "cleave off process" has been carried out. The cleaved off process may be, at least partially, controlled by regulating the electrical potential at the working electrode 28 and/or the counter electrode 30 and/or the reference electrode 32.

Fig. 7 a) illustrates a close up view of a grafted protective surface layer 40 where the compounds have long chains 38 so that the layer thickness $L_2$ of the protective surface layer 40 is relatively large. The grafted protective surface layer 40 may be a diazonium salt layer containing polyethylene glycol (PEG) chains. A multilayer 39 is grafted on the filtration layer 6 by providing several layers on the top of each other. Hereby, a larger layer thickness $L_3$ is achieved.

Fig. 7 b) illustrates a close up view of a grafted protective surface layer 40 where the compounds have shorter chains 38. The layer thickness $L_1$ of the protective surface layer 40 is small compared with the layer thickness $L_1$ illustrated in Fig. 7 a).

Fig. 8 a) illustrates a graph showing the flux ratio 60 as function of time 62 for a typical filtration membrane that has not been modified and a filtration membrane, respectively. The flux ratio 60 as function of time 62 for the filtration membrane is indicated by the top curve 66. The flux ratio 60 as function of time 62 for the non-modified filtration membrane is indicated by the lower curve 68.

It can be seen that the flux ratio 60 of filtration membrane is higher than the flux ratio 60 of the prior art filtration membrane. It can also be seen that the flux ratio 60 of the prior art filtration membrane decreases much faster than the flux ratio 60 of the filtration membrane 4. The protective layer 40 on the filtration membrane 4 of the present invention inhibits growth of a fouling layer directly on the surface of the filtration layer 6 of the filtration membrane 4. Therefore, it is possible to keep the filtration layer of the filtration membrane 4 cleaner for a longer time period compared to a prior art filtration membrane. Since the filtration layer 6 of the filtration membrane 4 is subject to less fouling or more easily removable fouling than a traditional non-modified filtration membrane, a high flux ratio 60 can be maintained over a long time period. This means that also the flux, under fixed pressure conditions, can be kept high.

Fig. 8 b) is a graph showing the flux ratio 60 versus time 62 before and after a clean in place (CIP) process. The curve 68' is for a typical non-modified filtration membrane while curve 66' is for a filtration membrane 4. The CIP process is carried out at the same time 64 for both the prior art filtration membrane and the filtration membrane 4. The CIP process is a process of cleaning the surface of the filtration layer 6 of the filtration membrane 4. It is possible to carry out the CIP process in a filtration system 2 without disassembling the filtration system 2. Often cleaning chemicals are used to achieve a sufficient cleaning of the surface. The CIP process is carried out in order to clean the filtration membrane so that the flux ratio is increased after a period of use where fouling and/or clogging have been induced.

When the curves 66' and 68' are compared to one another it is noticeable that the filtration membrane 4 is less sensitive to fouling than the non-modified filtration membrane. The protective layer 40 attached on the surface of the filtration layer 6 of the filtration membrane 4 can explain this difference.

It is possible to make similar curves showing the transmembrane pressure (TMP) as function of time 62 instead of the flux ratio 60 versus time 62. In fact both the flux ratio 60 and the TMP indicate the filter capacity of the filtration membrane 4. When the flux ratio is close to 100% the filtration membrane is clean and suitable for being used to filter a fluid 14. When the flux ratio 60 is reduced the filter capacity of the filtration membrane 4 is also reduced. A low TMP indicates that the filtration membrane 4 is clean and thus that the filtration membrane 4 has a high filter capacity. A high TMP indicates that a fouling layer causes clogging of the filtration layer of the filtration membrane 4 and that the filtration membrane 4 needs to be cleaned. The limits imposed on when to initiate e.g. a back-flush or a CIP process depends on the specific filtration system and the fluid under investigation.

It can be seen from Fig. 8 b) that the flux ratio 60 is increased following the CIP process. This is indicated by the increasing curve portions 70 in Fig. 8 b).

Fig. 9 a) illustrates a number of diazonium salts 72, 74, 76, 78, 80 that may be used to build an anti fouling layer (a protective surface layer) on a filtration layer 6 of a filtration membrane 4.

The diazonium salt 72 is 4-(carboxyl) phenyl diazonium tetrafluoroborate which is easily synthesized using protocols well known to a person skilled in the art from the pertinent precursor (p-amino-benzoic acid). It may be advantageous to use this particular diazonium due to its hydrophilic character as well as its ability to be deprotonated/protonated as a function of pH, i.e. reversibly tune its hydrophilic character. This may be advantageous in media in which increasing the hydrophilic character of the membrane reduces the propensity of membrane fouling. It is also known that charged layers on membranes have a tendency to reduce fouling.

The diazonium salt 74 is 4-(methoxy) phenyl diazonium tetrafluoroborate which is easily synthesized using protocols well known to a person skilled in the art from the pertinent precursor (p-methoxy aniline) Another highly related compound is provided by the commercially available Fast Blue BB salt. It may be advantageous to use these particular diazonium salts as they provide a simplified system incorporating the ether linkage between the benzene ring and substituent. This in part increases the hydrophilic character of the film and due to the electron donating nature of these substituents, these compounds are comparatively easy to oxidise (so that the protective surface layer can be cleaved off by way of example).

The diazonium salt 76 is 4-(2-(2-(methoxy)ethoxy)ethoxy) phenyl diazonium tetrafluoroborate which may offer significant advantages in that it incorporates an albeit short polyethylene glycol function in the layer. Such polyethylene glycol functionalities in membranes have by others been shown to make membranes much less prone to fouling. In particular it is known to reduce the so-called adsorptive fouling in which a first layer of water molecules is replaced by the fouling solute. This phenomenon is mainly due to its hydrophilic character. This may be advantageous in media in which increasing the hydrophilic character of the membrane reduces the propensity of membrane fouling.

The forth example 78 is 4-(nitro) phenyl diazonium tetrafluoroborate which is a well known diazonium salt to a person skilled in the art. The advantage of this particular salt is that its hydrophilic character may be varied by controlling the oxidation state of the appended nitrogen atom. In the highest oxidation state, NO2, it is marginally polar but can easily (by electrochemical means) be transformed into the reduced forms such as hydroxyl amine, -NHOH, or amine, -NH2. These latter will have pH activity and thus also have the option to exercise controlled hydrophilic character.

The final example, 80, is 4-(fluoro) phenyl diazonium tetrafluoroborate. The advantage of this particular species is that is introduces fluorinated functionalities on the surface on the membrane layer. This may increase the chemical resistance of the protective surface layer 40 as well as reduce the propensity of certain types of fouling to adsorb to the surface of the membrane.

As an additional embodiment, combinations of two or more diazonium salts to impose bi- and trifunctional layers on the surface may be advantageous to reduce particular types of fouling on the surface.

Fig. 9 b) illustrates an example of a compound reaction causing deposition of an anti fouling layer (protective surface layer 40) on a filtration layer 6 of a filtration membrane 4 The central idea is that the diazonium salt 84 is electrochemically reduced in a one-electron process to release nitrogen gas 94 and the corresponding carbon centred radical. This radical 88 can then proceed according to a range of reaction mechanisms including homogeneous reactions, but most importantly also attach to the surface of the filtration layer 6. While the nature of the bond produced between the surface of the electrode and the layer has been the subject of some debate, there exists little doubt that the bonds 96 so made are strong and can persist even strong ultrasonic cleaning protocols.

Fig. 9 c) illustrates how additional layers of a compound 84' can be added to a compound 84 that is attached to the filtration layer 6 of a filtration membrane 4 like the one shown in Fig. 9 b). The grafting process involving diazonium salts does not stop at the level indicated in Fig. 9 b). Rather the electrochemically generated radicals may react with groups already attached to the surface of the filtration layer 6. The degree to which this secondary process continues can to some extent be controlled by the applied electrochemical potential on the working electrode. The potential control exercised can have significant ramifications on the layer structure, density, and thickness. This will be known to a person skilled in the art.

## List of reference numerals

| | |
|---|---|
| 2 - | Filtration system |
| 4 - | Filtration membrane |
| 6 - | Filtration layer |
| 8 - | Porous base layer |
| 10 - | Pores |
| 12 - | Electrical source |
| 14 - | Fluid |
| 16 - | Fluid inlet |
| 18 - | Fluid outlet |
| 20 - | Permeate outlet |
| 22 - | Housing |
| 24, 26 - | Compound |
| 28 - | Working electrode |
| 30 - | Counter electrode |
| 32 - | Reference electrode |

| | |
|---|---|
| 34 - | Seal ring (e.g. an O-ring |
| 38 - | End chain |
| 40 - | Protection layer |
| 42, 43, 44 - | Foulants |
| D, d - | Layer thickness |
| $W_1$, $W_2$ - | Width |
| X - | Axis parallel to the surface of the filtration layer |
| Y - | Axis perpendicular to the surface of the filtration layer |
| 46 - | Base member |
| 50 - | Top member |
| 52 - | Cavity |
| 54, 56, 58 - | Wire |
| D, d, $L_1$, $L_2$, $L_3$ - | Layer thickness |
| 60 - | Flux ratio |
| 62 - | Time |
| 64 - | Time for carrying out a CIP process |
| 66, 66', 68, 68'- | Curve |
| 70 - | Increasing curve portion |
| 72 - | 4-(carboxyl) phenyl diazonium tetrafluoroborate |
| 74 - | 4-(methoxy) phenyl diazonium tetrafluoroborate |
| 76 - | 4-(2-(2-(methoxy)ethoxy)ethoxy) phenyl diazonium tetrafluoroborate |
| 78 - | 4-(nitro) phenyl diazonium tetrafluoroborate |
| 80 - | is 4-(fluoro) phenyl diazonium tetrafluoroborate |
| 84 - | Compound |
| 86 - | Diazonium group $N_2^+$ |
| 88 - | Aryl or alkyl |
| 90 - | Benzene ring |

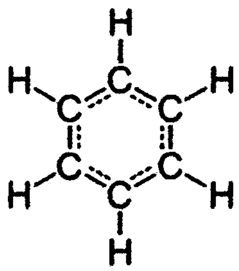

| | |
|---|---|
| 92 - | Electron, $e^-$ |
| 94 - | Nitrogenous gas ($N_2$) |
| 96 - | Covalent binding |

## Claims

1. A method for carrying out a filtration process of a fluid (14) by using a filtration membrane (4) comprising a porous base layer (8) attached to an electrically conductive filtration layer (6) having pores (10) extending through the filtration layer (6), wherein the method comprises the following steps:

   a) attaching a compound (24, 26) on the filtration layer (6) and hereby providing a protective surface layer (40) on the filtration layer (6) or forming a second compound (24, 26) from a first compound (24, 26) and attaching the second compound (24, 26) on the filtration layer (6) and hereby providing a protective surface layer (40) on the filtration layer (6)
   b) filtering a fluid comprising foulants (42, 43, 44), wherein some of the foulants (42, 43, 44) settle along the surface of the pores (10)
   c) at least partially cleaving off the protective surface layer (40) of the filtration layer (6) during a filtration process, thereby removing the foulants (42, 43, 44) from the filtration layer (6), the method being **characterised in that**

it further comprises the step of
d) grafting a new protective surface layer (40) on the filtration layer (6) before the filtration layer (6) is being reused to filter the fluid (14).

2. A method according to claim 1 **characterised in that** an electrical field is provided on the filtration membrane (4) so that:

a) a compound (24, 26) is attached on the filtration layer (6) through an electrochemical process and that
b) the protective surface layer (40) is, at least partially, cleaved off the filtration layer (6) through an electrochemical process.

3. A method according to claim 1 **characterised in that** the transmembrane pressure across the filtration membrane (4) and/or the flux through the filtration layer (6) of the filtration membrane (4) is determined and that:

a) a compound (24, 26) is attached on the filtration layer (6) and
b) the compound (24, 26) is at least partially, cleaved off the protective surface layer (40) from the filtration layer (6) on the basis of predefined and determined transmembrane pressure and/or flux conditions during the filtration process.

4. A method according to one of the claims 2-3 **characterised in that** the thickness of the protective surface layer (40) is controlled by regulating the electrical potential applied the filtration layer (6) of the filtration membrane (4).

5. A method according to one of the claims 2-4 **characterised in that** a back flush process is carried out and that the protective surface layer (40) is, at least partially, cleaved off the filtration layer (6) basically contemporary with the back flush process.

6. A method according to one of the claims 2-5 **characterised in that** compound containing fluid is drained away and that a compound (24, 26) is added to the fluid (14) during the filtration process.

## Patentansprüche

1. Verfahren zur Durchführung eines Filtrationsprozesses eines Fluids (14) unter Verwendung einer Filtrationsmembran (4), umfassend eine poröse Basisschicht (8), welche an einer elektrisch leitfähigen Filtrationsschicht (6) mit Poren (10) angebracht wird, die sich durch die Filtrationsschicht (6) erstrecken, wobei das Verfahren die folgenden Schritte umfasst:

a) Aufbringen einer Verbindung (24, 26) auf der Filtrationsschicht (6) und dadurch Bereitstellen einer Oberflächenschutzschicht (40) auf der Filtrationsschicht (6) oder Bilden einer zweiten Verbindung (24, 26) aus einer ersten Verbindung (24, 26) und Aufbringen der zweiten Verbindung (24, 26) auf der Filtrationsschicht (6) und dadurch Bereitstellen einer Oberflächenschutzschicht (40) auf der Filtrationsschicht (6),
b) Filtern eines Fluids, umfassend Faulstoffe (42, 43, 44), wobei sich einige der Faulstoffe (42, 43, 44) entlang der Oberfläche der Poren (10) absetzen,
c) mindestens teilweises Abspalten der Oberflächenschutzschicht (40) der Filtrationsschicht (6) während eines Filtrationsprozesses, wodurch die Faulstoffe (42, 43, 44) aus der Filtrationsschicht (6) entfernt werden,

wobei das Verfahren **dadurch gekennzeichnet ist, dass** es ferner den Schritt umfasst:
d) Pfropfen einer neuen Oberflächenschutzschicht (40) auf die Filtrationsschicht (6), bevor die Filtrationsschicht (6) erneut verwendet wird, um das Fluid (14) zu filtern.

2. Verfahren nach Anspruch 1, **dadurch gekennzeichnet, dass** ein elektrisches Feld auf der Filtrationsmembran (4) derart bereitgestellt wird, dass:

a) eine Verbindung (24, 26) auf der Filtrationsschicht (6) durch einen elektrochemischen Prozess aufgebracht wird, und dass
b) die Oberflächenschutzschicht (40) mindestens teilweise von der Filtrationsschicht (6) durch einen elektrochemischen Prozess abgespaltet wird.

**3.** Verfahren nach Anspruch 1, **dadurch gekennzeichnet, dass** der Transmembrandruck quer über die Filtrationsmembran (4) und/oder der Durchfluss durch die Filtrationsschicht (6) der Filtrationsmembran (4) bestimmt wird, und dass:

a) eine Verbindung (24, 26) auf der Filtrationsschicht (6) aufgebracht wird, und
b) die Verbindung (24, 26) mindestens teilweise von der Oberflächenschutzschicht (40) von der Filtrationsschicht (6) auf der Basis des vordefinierten und bestimmten Transmembrandrucks und/oder der Durchflussbedingungen während des Filtrationsprozesses abgespaltet wird.

**4.** Verfahren nach einem der Ansprüche 2 bis 3, **dadurch gekennzeichnet, dass** die Dicke der Oberflächenschutzschicht (40) durch Regeln des elektrischen Potentials gesteuert wird, das an die Filtrationsschicht (6) der Filtrationsmembran (4) angelegt wird.

**5.** Verfahren nach einem der Ansprüche 2 bis 4, **dadurch gekennzeichnet, dass** ein Rückspülprozess durchgeführt wird, und dass die Oberflächenschutzschicht (40) mindestens teilweise von der Filtrationsschicht (6) grundsätzlich gleichzeitig mit dem Rückspülprozess abgespaltet wird.

**6.** Verfahren nach einem der Ansprüche 2 bis 5, **dadurch gekennzeichnet, dass** das eine Verbindung enthaltende Fluid abgezogen wird, und dass eine Verbindung (24, 26) dem Fluid (14) während des Filtrationsprozesses zugegeben wird.

## Revendications

**1.** Procédé pour réaliser un processus de filtration d'un fluide (14) en utilisant une membrane de filtration (4) comprenant une couche de base poreuse (8) fixée à une couche de filtration électriquement conductrice (6) ayant des pores (10) qui s'étendent à travers la couche de filtration (6), dans lequel le procédé comprend les étapes suivantes consistant à :

a) fixer un composé (24, 26) sur la couche de filtration (6) et fournir ainsi une couche de surface protectrice (40) sur la couche de filtration (6) ou former un second composé (24, 26) à partir d'un premier composé (24, 26) et fixer le second composé (24, 26) sur la couche de filtration (6) et fournir ainsi une couche de surface protectrice (40) sur la couche de filtration (6)
b) filtrer un fluide comprenant des salissures (42, 43, 44), dans lequel certaines des salissures (42, 43, 44) se déposent le long de la surface des pores (10)
c) cliver au moins partiellement la couche de surface protectrice (40) de la couche de filtration (6) pendant un processus de filtration, en éliminant ainsi les salissures (42, 43, 44) de la couche de filtration (6), le procédé étant **caractérisé en ce qu'**il comprend en outre l'étape consistant à
d) greffer une nouvelle couche de surface protectrice (40) sur la couche de filtration (6) avant que la couche de filtration (6) ne soit réutilisée pour filtrer le fluide (14).

**2.** Procédé selon la revendication 1, **caractérisé en ce qu'**un champ électrique est prévu sur la membrane de filtration (4) de sorte que:

a) un composé (24, 26) est fixé sur la couche de filtration (6) par un processus électrochimique, et **en ce que**
b) la couche de surface protectrice (40) est, au moins partiellement, clivée de la couche de filtration (6) par un processus électrochimique.

**3.** Procédé selon la revendication 1, **caractérisé en ce que** la pression transmembranaire à travers la membrane de filtration (4) et/ou le flux à travers la couche de filtration (6) de la membrane de filtration (4) est déterminé, et **en ce que** :

a) un composé (24, 26) est fixé sur la couche de filtration (6) et
b) le composé (24, 26) est, au moins partiellement, clivé de la couche de surface protectrice (40) de la couche de filtration (6) sur la base de conditions de pression transmembranaire et/ou de flux prédéfinies et déterminées pendant le processus de filtration.

**4.** Procédé selon l'une des revendications 2 et 3, caractérisé en que l'épaisseur de la couche de surface protectrice (40) est commandée en régulant le potentiel électrique appliqué à la couche de filtration (6) de la membrane de

filtration (4).

5. Procédé selon l'une des revendications 2 à 4, **caractérisé en ce qu'**un processus de rinçage à contre-courant est effectué et **en ce que** la couche de surface protectrice (40) est, au moins partiellement, clivée de la couche de filtration (6) fondamentalement en même temps que le processus de rinçage à contre-courant.

6. Procédé selon l'une des revendications 2 à 5, **caractérisé en ce qu'**un composé contenant un fluide est évacué, et **en ce qu'**un composé (24, 26) est ajouté au fluide (14) pendant le processus de filtration.

Fig. 1

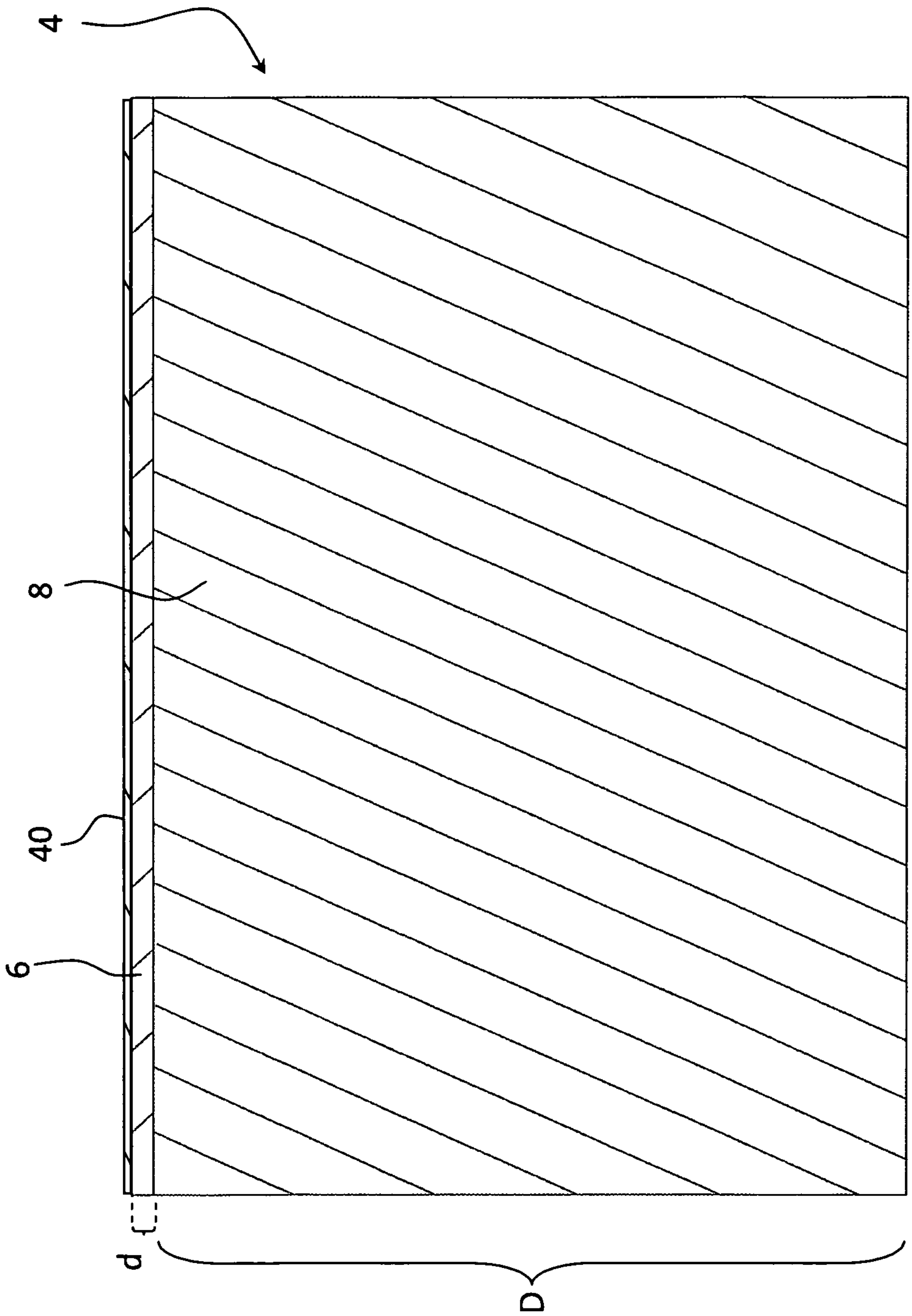

Fig. 2

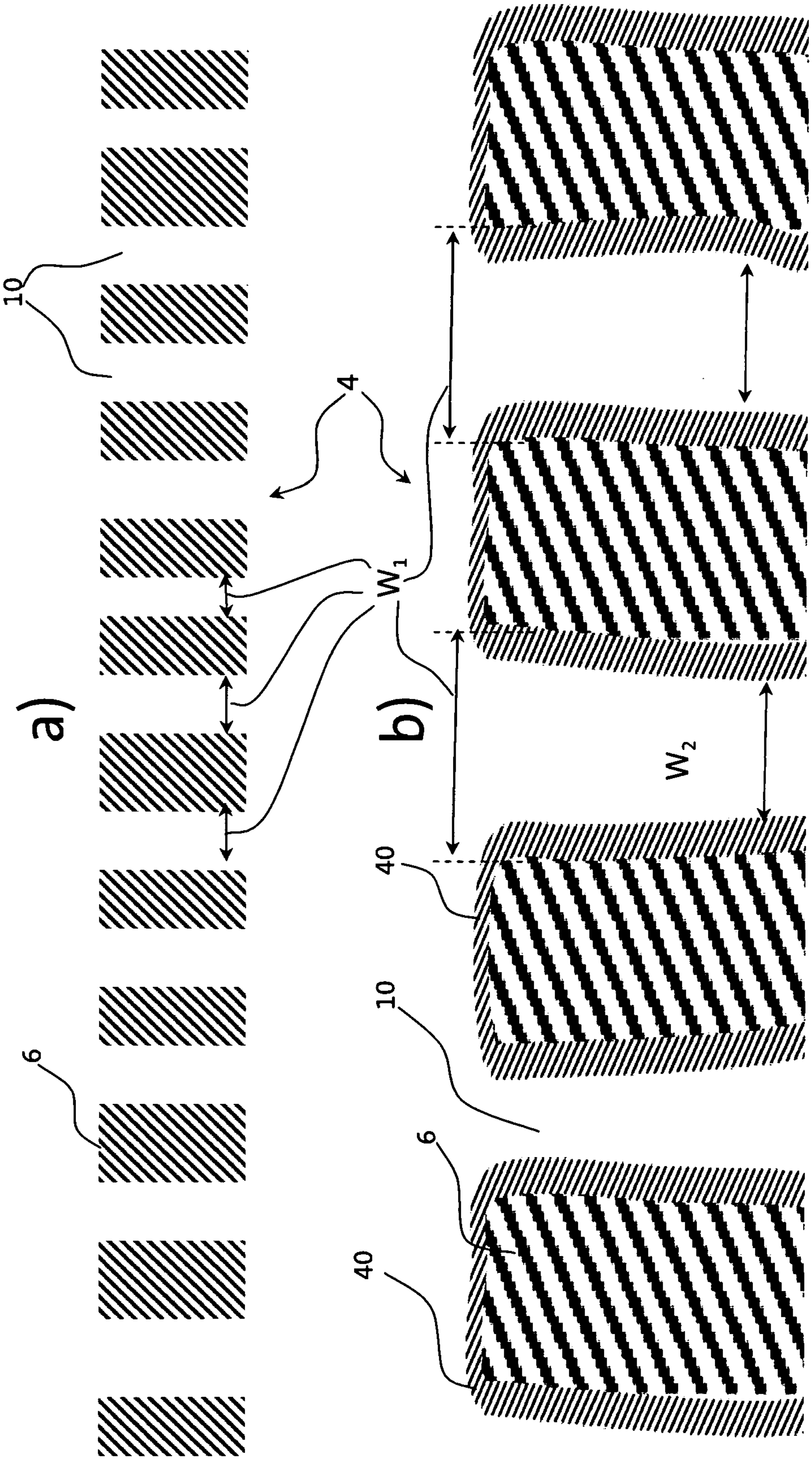

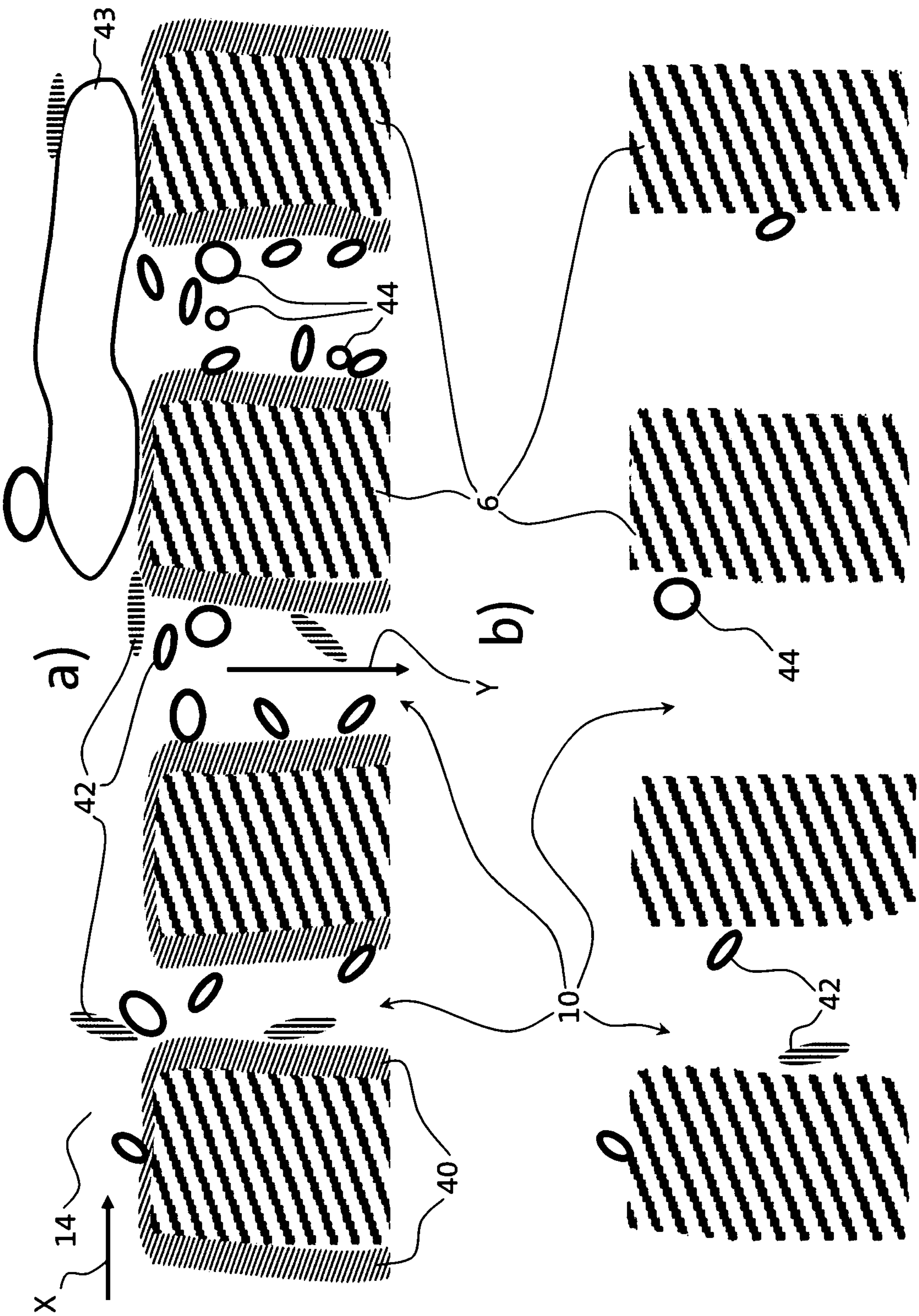


Fig. 3

Fig. 4

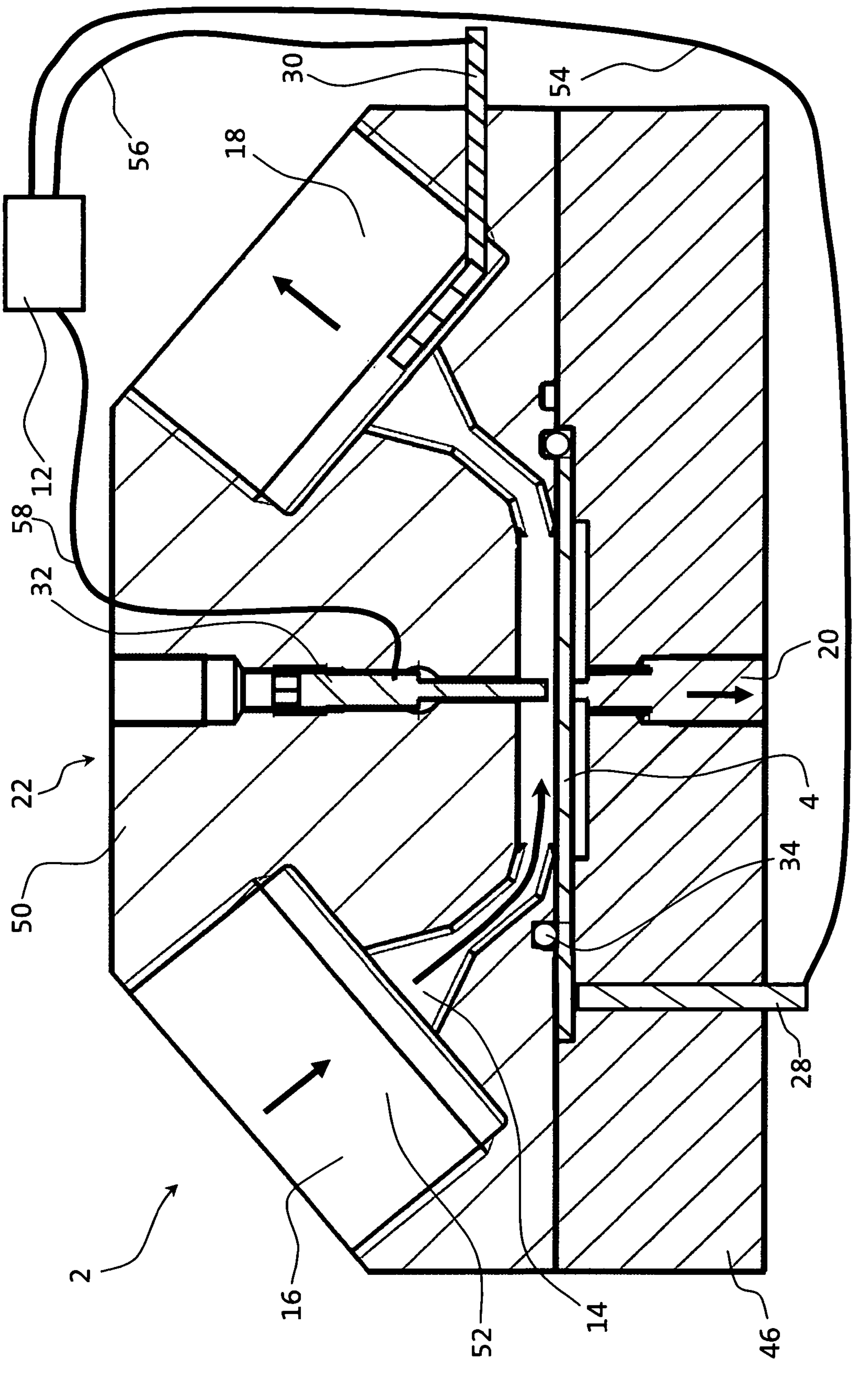

Fig. 5

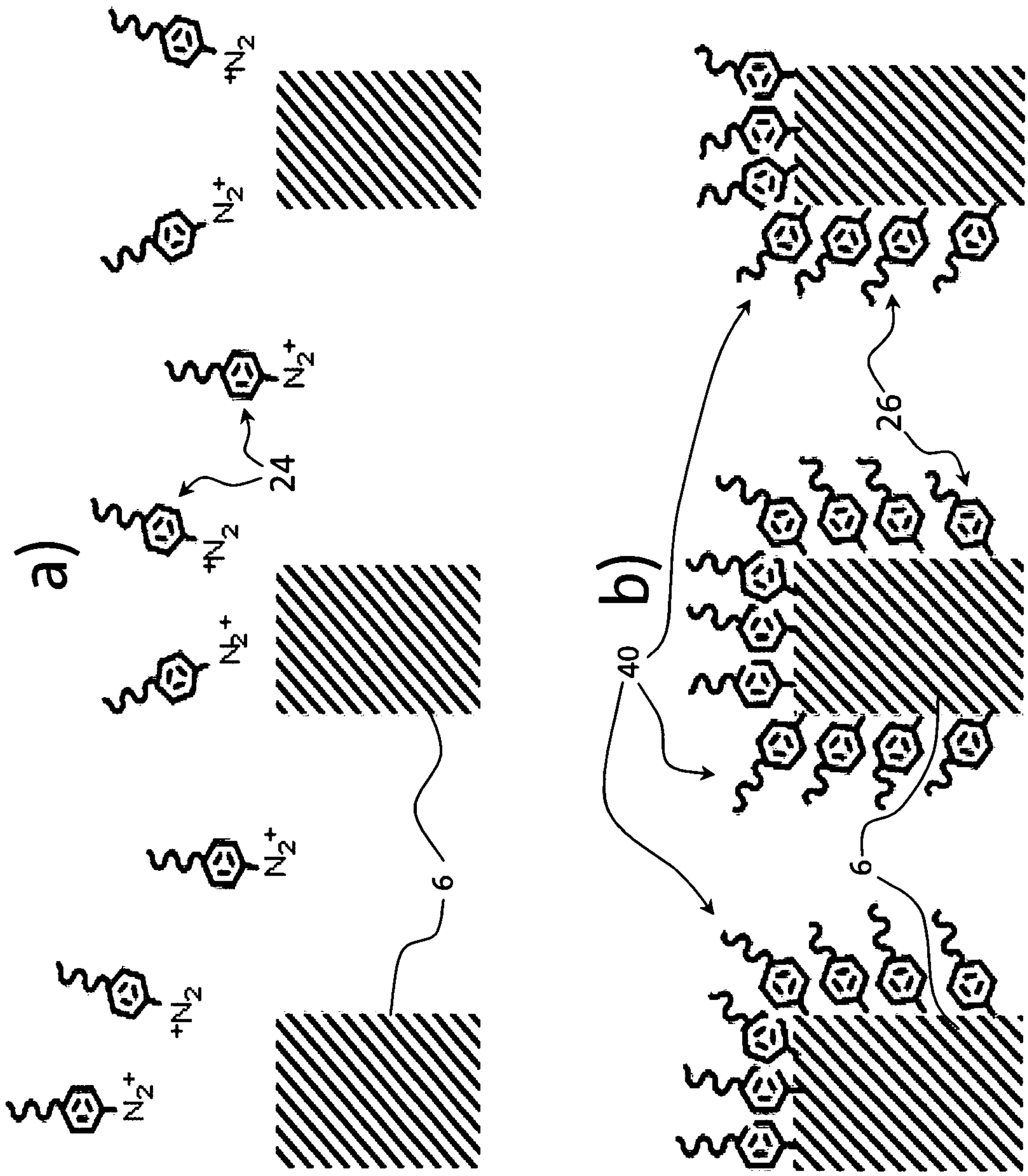

Fig. 6

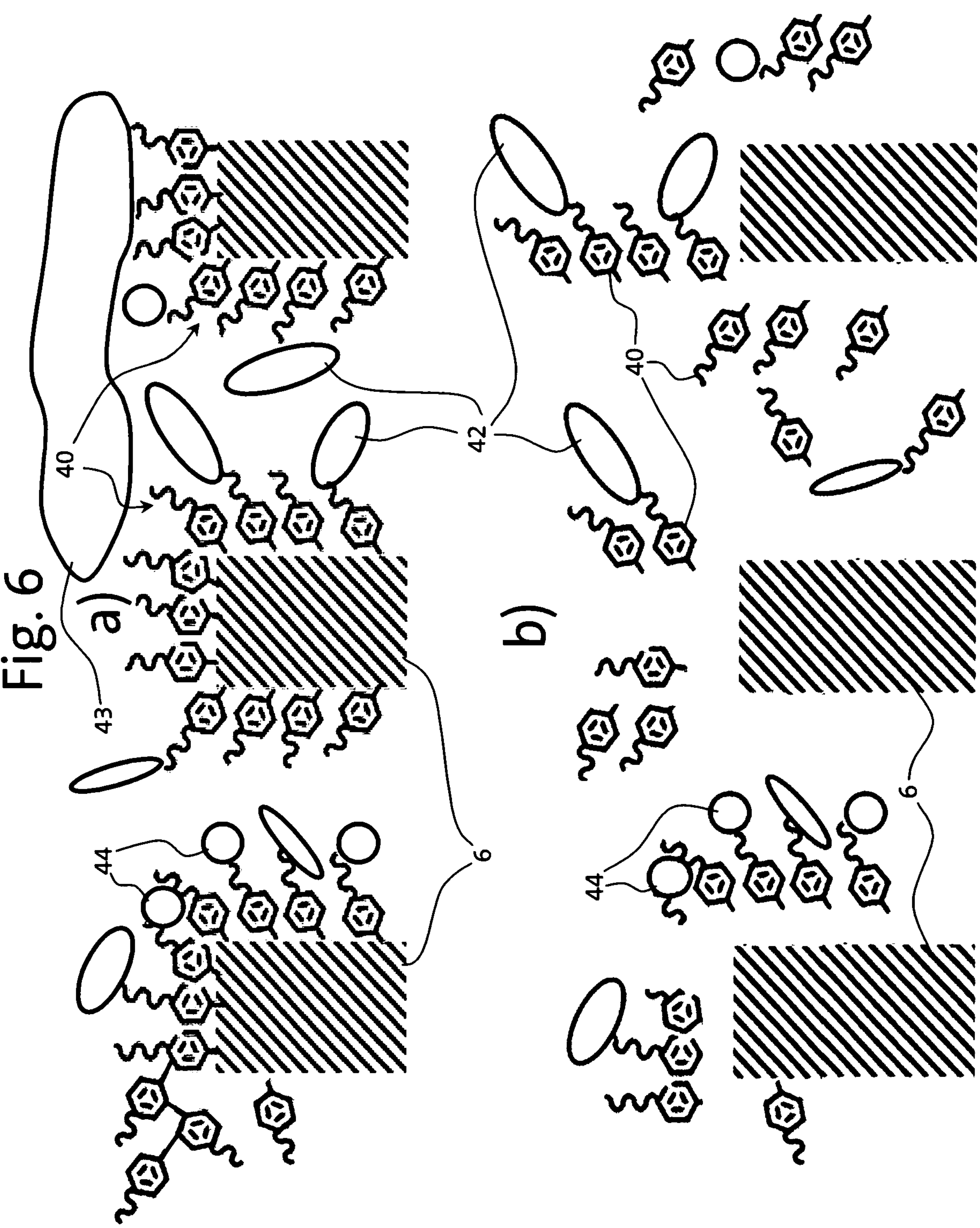

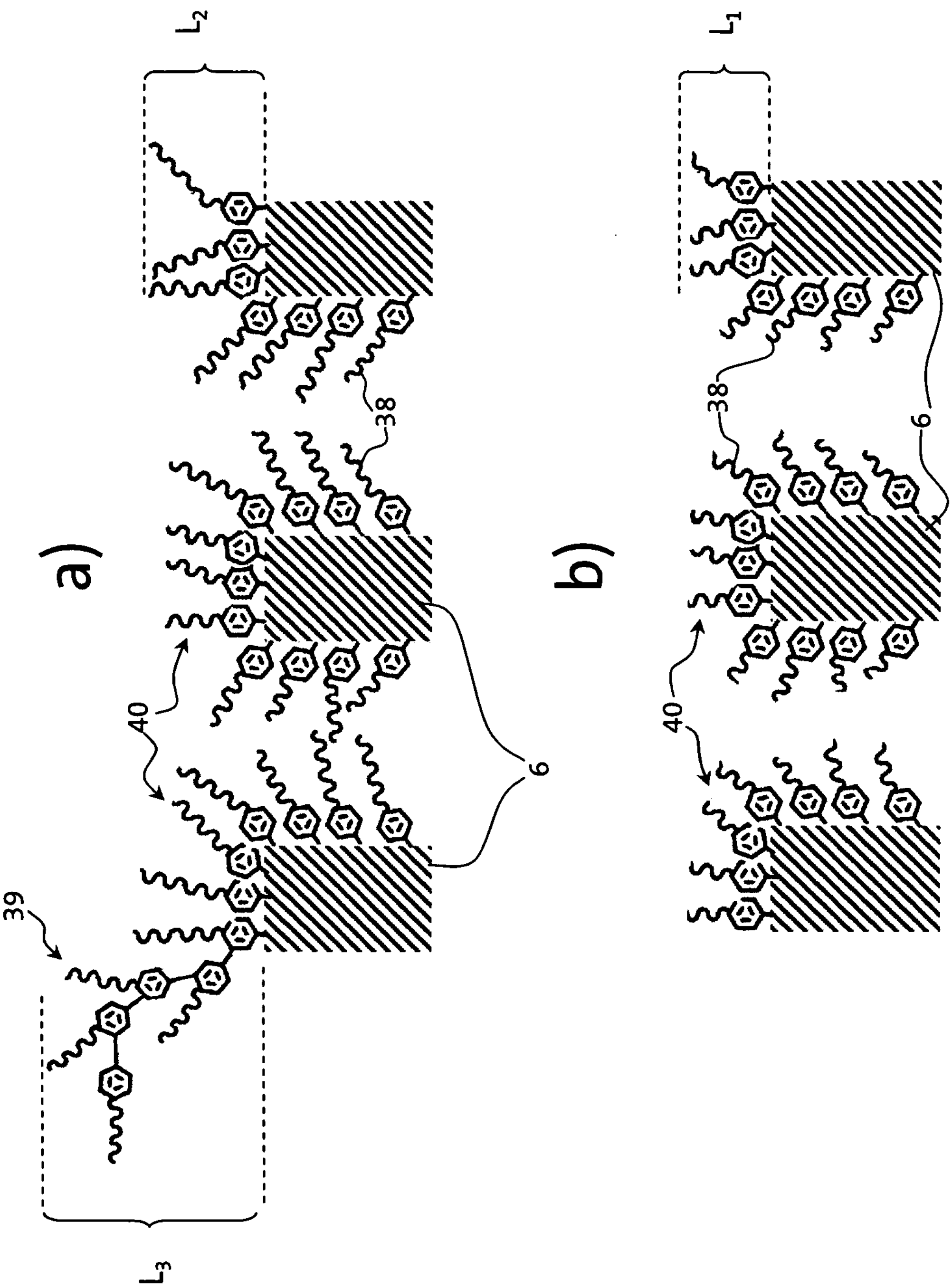
Fig. 7
a)
b)
39
40
38
6
L2
L1
L3

Fig. 8

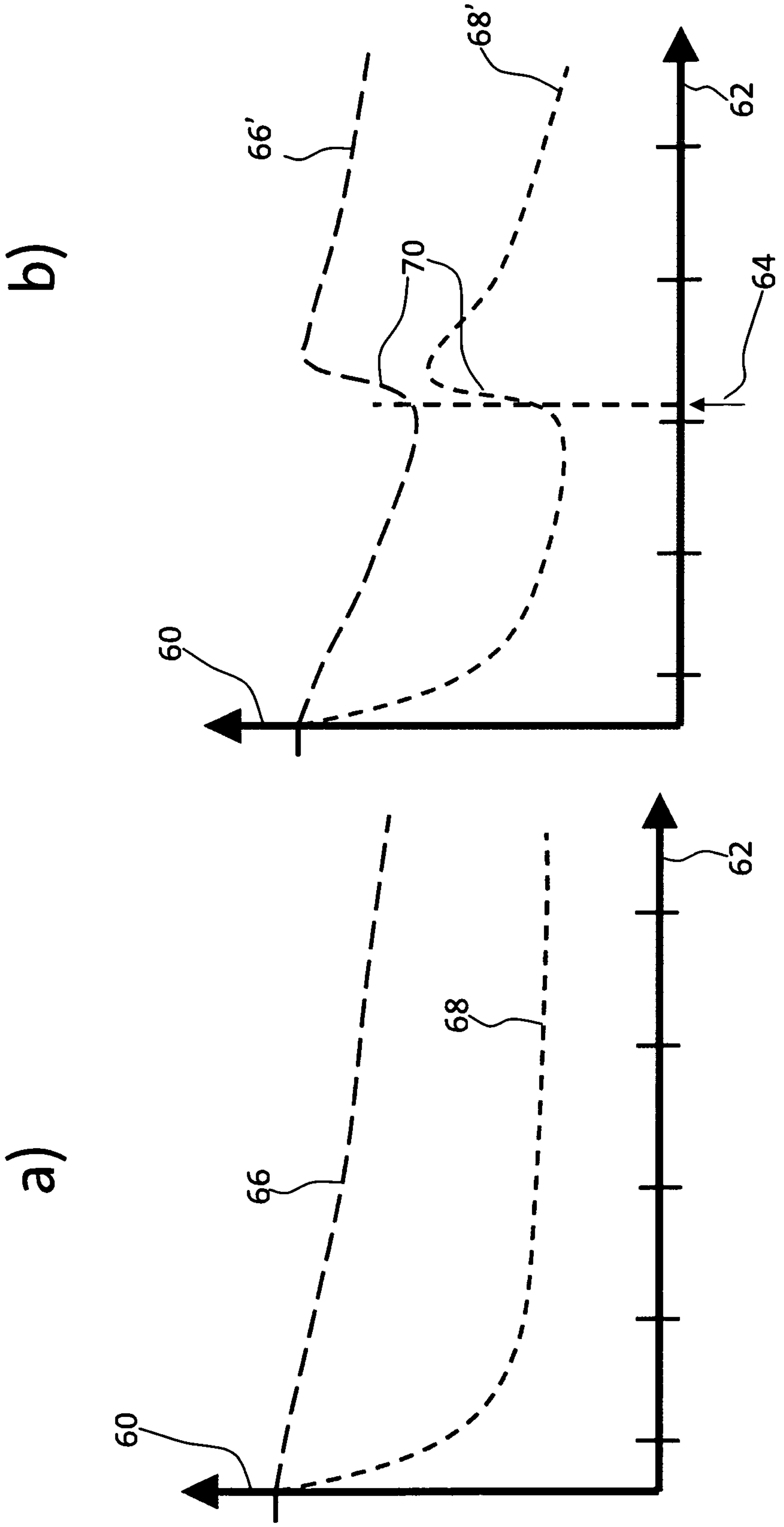

Fig. 9

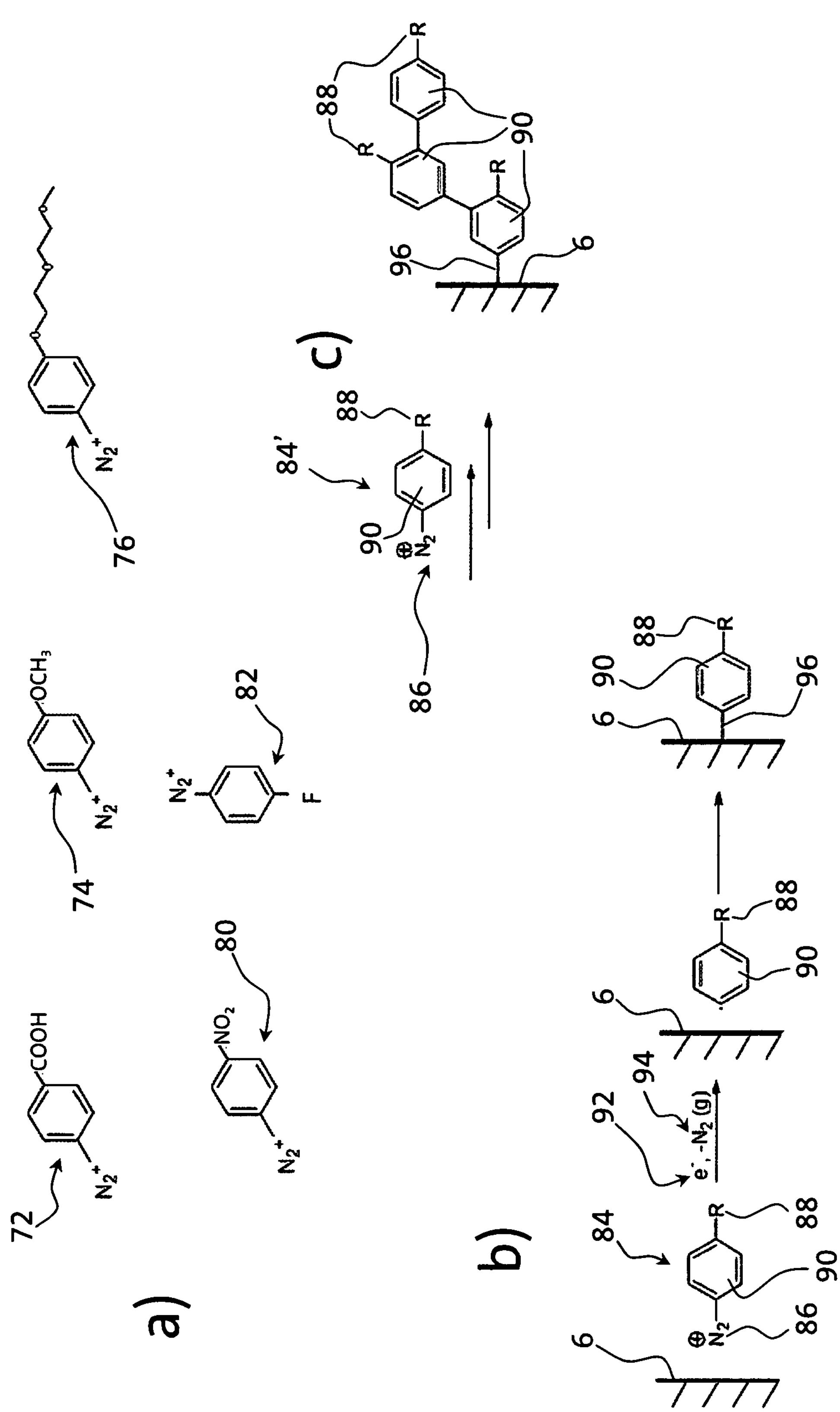

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- US 2007084797 A1
- US 6287432 B1